# EUROPEAN PATENT SPECIFICATION

(11) **EP 0 514 116 B1**
(45) Date of publication and mention of the grant of the patent: **06.03.1996**
(21) Application number: 92304242.8
(22) Date of filing: 12.05.1992
(51) Int. Cl.: G21C 3/322

(54) **Spacer associated pressure drop in a boiling water reactor bundle having part length rods**
Druckverlusterzeugender Abstandshalter in einem Siedewasserreaktorbrennstabbündel mit Teillängenstäben
Grille d'espacement pour créer une perte de charge dans un assemblage de combustible d'un réacteur à eau bouillante ayant des barreaux de longueur partielle

(30) Priority: 17.05.1991 US 701931
(43) Date of publication of application: 19.11.1992
(73) Proprietor: GENERAL ELECTRIC COMPANY, Schenectady, NY 12345 (US)
(72) Inventor: Matzner, Bruce (NMN), San Jose, California 95125 (US); Wolters, Richard Arthur, Jr., San Jose, California 95123 (US); Reese, Anthony Paul, San Jose, California 95136 (US); Johansson, Eric Bertil, Wrigthsville Beach, North Carolina 28480 (US)
(74) Representative: Lupton, Frederick

(56) References cited:
- EP-A- 0 260 602
- EP-A- 0 336 203
- DE-A- 4 013 397

## Description

This invention relates to nuclear fuel bundles utilized in boiling water nuclear reactors having part length rods. More particularly, the combination of a fuel bundle having part length rods is disclosed wherein pressure reduction obtained by the introduction of part length rods in the upper two phase region of a fuel assembly is reclaimed by the introduction of spacers causing substantial recapture of the reduced pressure drop. Improved critical power results.

For example, spacer pitch can be changed to add spacers to the upper two phase region of the fuel bundle. Alternately, so-called vanes, especially swirl vanes can be added. Other expedients are introduced for causing pressure drop with the spacers including increased spacer height and constructing the spacers of thicker metallic materials.

### BACKGROUND OF THE INVENTION

In European Patent Application Publication No. 336,203 (our ref 24NT 4688) (Dix), a fuel bundle having a plurality of part length rods was illustrated. A summary of that construction and the davantages set forth in this reference can be instructive.

Construction of the fuel bundle in Dix is conventional with the exception of the addition of less than full length fuel rods. The conventional portion of the disclosed fuel assembly in Dix is easy to understand. This assembly includes a channel having vertically extending walls for extending around a fuel bundle assembly volume. The channel is open at the bottom for receipt of water moderator and open at the top for the discharge of water and steam. The fuel bundle includes a matrix of vertically upstanding fuel rods -- these rods being sealed tubes containing fissionable materials. The fuel rods are supported on a lower tie plate which permits the entry of the water moderator to the fuel bundle. The fuel rods typically extend to an upper tie plate which maintains the fuel rods in their side by side vertical relation and permits the generated steam and remaining water to escape.

The Dix et al. disclosure adds to the conventional fuel assembly, a plurality of less than full length spaced apart so-called "part length (fuel) rods" (PLRs). These fuel rods are supported on the lower tie plate, extend upwardly to and toward the upper tie plate, but terminate short of the upper tie plate. Between the point of part length fuel rod termination and the upper tie plate, the part length fuel rod defines in the upper two phase region of the fuel bundle a vent volume. This vent volume preferentially receives vapor from the liquid vapor two phase mixture in the upper two phase region of the fuel bundle during power producing operation.

Numerous advantages result from the part length rod construction. Improved cold shut down margin enables fuel to be designed with reduced amounts of burnable absorbers such as gadolinium. The tendency of the fuel bundle in the reactor to produce plutonium at the top of the bundle from resonance neutron capture in uranium 238 is reduced. The void overlying the part length rod has an increased vapor fraction with the result that the full length rods adjacent the voids have an increased liquid fraction. Further, the pressure drop in the upper two phase region of the fuel bundle is reduced. This being the case, the fuel bundle enjoys increased stability from thermal hydraulic and nuclear instabilities.

The fuel bundles are elongate. Further, the fuel rods contained within the fuel bundle are flexible. These fuel rods can flex out of their designed side-by-side spacing -- and even into interfering contact with one another -- due to flow induced vibration and rod bow. Therefore, spacers are utilized throughout the length of the fuel bundle.

Fuel bundle spacers have the function of maintaining the individual fuel rods at given elevations in their designed side-by-side relationship. Such spacers usually define a matrix of individual fuel rod containing cells. These cells fit around each and every fuel rod at their particular elevation in a fuel bundle. The fuel bundle spacers maintain the fuel rods in their designed side-by-side relationship and prevent interfering contact between the individual fuel rods. In the case of the part length rods where the fuel rods do not extend to the upper tie plate, the spacers maintain the fuel rods in their designed upstanding relation.

All fuel bundles -- including those having part length rods -- must be designed to operate within thermal limits. Specifically, that thermal limit in boiling water reactors known as critical power has always been a limitation. Critical power originates from rupture of the coolant liquid film on the exterior surface of the fuel rod in a phenomena known as "transition boiling."

In this transition boiling condition a liquid film no longer coats the exterior surface of the fuel rod. The rod on the exterior surface is exposed to coolant vapor only. Heat transfer from the fuel interior of the fuel rod undergoing fission reaction to the coolant is reduced. The fuel rod cladding becomes overheated. Naturally, as any fuel rod within a fuel bundle even approaches such a boiling condition anywhere along its length, power is restricted to avoid violation of this "critical power" limitation.

Past experimentation has been directed to the critical power limitation. It is known that by decreasing the spacer pitch in the upper two phase region of the fuel bundle, that critical power can be improved. Unfortunately, the additional spacers caused additional pressure loss. This additional pressure loss causes additional tendencies for instabilities at certain power rates of the reactor. These instabilities include local and core wide thermal hydraulic and nuclear thermal hydraulic instabilities. For these reasons, the experimentally determined improvement of critical power could not be implemented by decreasing the spacer pitch in the upper two phase region of boiling water nuclear reactor fuel bundles.

It is also known to incorporate so-called "swirl vanes" to both boiling water nuclear reactors and the spacers in boiling water nuclear reactors. These devices can be simply summarized and easily understood.

In summary, so-called swirl vanes are placed interstitially of fuel rods. The vanes themselves comprise pieces of metal twisted in a helical pattern. In the earliest known cases, these so-called swirl vanes were the same length as the fuel rods in the reactor. In a later case, a spacer constructed from such swirl vanes was constructed. See EP-A-0 308 701 entitled SWIRL VANES INTEGRAL WITH SPACER GRID.

These swirl vanes when added to reactors had a beneficial effect and a detrimental effect.

The beneficial effect was the classification of water from upwardly flowing water and steam. Specifically, upwardly flowing water and steam. Simply stated, and despite the helical pattern of the twisted metal strips, steam tended to upwardly flow about the swirl vanes. Water, however, did not tend to join this upward flow. Instead the heavier water received a horizontal velocity component from the swirl vanes. As the swirl vanes were placed interstitially of the fuel rods, the heavier water when thrown horizontally by the momentum of the swirl vanes has the beneficial effect of impacting the adjacent fuel rods. Consequently, the critical power limit is increased.

The detrimental effect of such swirl vanes is increased pressure drop. The swirl vanes themselves raise the pressure drop in the upper two phase region of the boiling water reactor. This increase in pressure drop will increase the possibility of instabilities including thermal hydraulic instabilities and nuclear, thermal hydraulic instabilities at high power/low flow conditions of the boiling water nuclear reactor. This being the case, the swirl vanes have not been in large measure introduced into the boiling water nuclear reactors.

Any physical explanation of spacer relative thermal hydraulic performance should depend on the flow regimes that the coolant experiences in flowing up the channel as well as how the flow interacts with the spacer.

Single phase water enters the bottom of the fuel assembly and is heated until sub cooled boiling occurs. Bubbles are formed at the surface of the fuel rod but quickly condense as they contact the bulk sub cooled flow. At the 100% power/100% flow condition bundle average bulk boiling will begin somewhere between the bottom spacer and the second spacer from the bottom of the fuel assembly. Now bubbles in the main flow stream will grow and the flow regime will progress from bubble flow to a type of slug or froth flow where individual small bubbles are starting to combine to make larger slugs of vapor. During these processes the vapor is flowing as bubbles or slugs in a continuous liquid medium.

Depending on conditions somewhere around the middle of the bundle a flow regime transformation takes place. Now there is so much vapor that it becomes the continuous medium and the liquid is either found as a thin film flowing on all the solid surfaces of the bundle or as droplets entrained in the continuous vapor. This is the annular flow regime which is important because it is where dry out or boiling transition will commonly take place in a BWR.

The limiting critical power condition in a BWR has been referred to in the literature alternately as dry out, boiling crisis, critical heat flux, burnout and boiling transition, the term which will be used here. Boiling transition is defined as the first condition of degraded heat transfer in the fuel bundle. This occurs in the annular flow regime as a result of the thin liquid film which covers all the fuel rod surfaces going to zero film thickness. A critical power problem results.

### SUMMARY OF THE INVENTION

We have discovered that there can be a deficiency in fuel bundles having part length rods. Specifically, such fuel bundles have a tendency to have critical power limitations in the upper two phase region of the fuel bundle. This critical power limitation occurs in the full length rods in the upper two phase region of the fuel bundle. It has been determined by experiment that flow rates around and adjacent the full length rods may be below average. This apparently has the tendency to generate transition boiling and the critical power limitations.

The reader will understand that this discovery is not prior art. In so far that discovery can constitute invention, our invention incorporates this discovery.

In a fuel bundle for use in the core of a boiling water nuclear reactor, part length rods having a tendency to reduce pressure drop are used in combination with spacers and spacer attached devices tending to restore pressure drop to improve critical power. The fuel bundle includes a preferred 9 by 9 matrix of upstanding vertically disposed fuel rods surrounded by a fuel channel between upper and lower tie plates. The tie plates support the fuel rods and permit the entry of water coolant at the lower tie plate and the exit of water and generated steam at the upper tie plate. Part length rods are distributed in the fuel rod matrix and combined with increased spacer pitch. The addition of the part length rods has the advantage of lowering the pressure drop. Spacer additions (such as the decrease in spacer pitch in the upper two phase region of the bundle) or spacer attachments (such as vanes and especially so-called swirl vanes) are utilized to restore the pressure drop removed by the insertion of the part length rods. There results a serendipitous improved critical power performance in the upper two phase region of the fuel assembly.

One method of achieving the disclosed result is the increase in total number of spacers in the upper two phase region of the fuel bundle to increase pressure drop. The spacers are distributed in the lower portion of the fuel bundle on about 50.8 cm (20 inch) centers. The increased number of spacers in the upper two phase region of the fuel bundle includes placing them on a pitch of less than (50.8 cm) (20") so as to allow for the addition of at least one spacer in the upper two phase region of the fuel bundle. The additional spacer is not required for the traditional purpose of preventing either rod bow or flow induced vibration. Indeed the additional spacer causes the pressure loss in the upper two phase region of the fuel bundle to be in part restored to that pressure loss that would be present if the fuel bundle contained an array having full length fuel rods only. However, the additional spacer causes the critical power of the fuel bundle to be improved. There results a fuel bundle with part length rods having all of the advantages inherent in the part length rod construction plus the added benefit of increased critical power.

Alternately, and in addition to the disclosed decrease in spacer pitch, spacers incorporating vanes can be used. By way of example, these vanes can be our preferred partial or complete swirl vane arrays. The vanes are incorporated to the spacers in the interstitial volumes between the fuel rods. Such spacers, although increasing pressure drop, cause improvement in critical power. In the case of the incorporation of vanes to the spacer, decreased pitch of spacers is not required.

Other expedients of spacer modification for realization of pressure drop are disclosed. Spacers on the same pitch having increased vertical height can be utilized. Further, spacer fabricated from thicker metallic construction can be used. In short, an device - preferably a spacer - in the upper two phase region of the fuel bundle which adds back the pressure drop lost by the use of part length rods is sufficient for the practice of this invention.

### OTHER OBJECTS, FEATURES AND ADVANTAGES

An object of this invention is to disclose a balance between the loss of pressure drop due to judicious use of part length rods and the increase in critical power due to spacer attached devices restoring the originally decreased pressure drop. There results an improved critical power.

A further object of this invention is to set forth preferable spacer attached devices for the increase of critical power through increased pressure drop. By way of example, either decreased spacer pitch or the addition of vanes, such as swirl vanes can be used. In either case, the decrease in critical power due to the presence of the part length rods is considerably less than the increase in critical power due to spacers causing the recaptured pressure drop. As a result, overall critical power is improved.

By way of example, and using the combination of actual tests and the spacer pitch of Figs. 2A and 2B with a 9 by 9 array of fuel rods with eight part length rods distributed in a fuel bundle, pressure drop improves 8% or 0.084 kg/cm (1.2 psi). in the upper two phase region of the fuel bundle. Critical power loss due to the presence of the part length rods may be in the range of 2 to 4%. At the same time, and as a result of the decreased spacer pitch, pressure drop increases 0.056 kg/cm (.8 psi). in the upper two phase region of the bundle. At the same time critical power gains over the part length rod array have been measured experimentally to be as much as 12%. Thus the net overall gain in critical power could be as much as 10% with pressure drop remaining substantially unchanged relative to the same fuel rod bundle having full length rods.

Regarding decreased spacer pitch, the total number of spacers in the upper two phase region of the fuel bundle is increased. Alternately, the spacers may be increased in vertical height. Further, and as a substitute, the thickness in material from which the spacers are fabricated can be increased. In either event, upon the recapture of the originally obtained pressure drop, improved critical power results.

Regarding the vane embodiment of this invention, the reader will understand that vanes incorporated to spacers have two effects. First, they are higher pressure loss devices causing pressure drop and hence improved critical power "downstream" (up above) their particular location in a fuel bundle. Thus, where spacers with vanes are utilized, decreased spacer pitch may not be required.

The reader should understand that we do not necessarily identify the specific mechanism causing the beneficial increase in critical power. We do identify that where pressure drop is increased, critical power is likewise increased in the upper two phase region of the fuel bundle.

The reader will understand that fuel rods are designed to have reduced power output above the last spacer. This being the case, it will be understood that the top most or last spacer is not required to have an appreciable pressure drop effect on the passing fluid flow. Thus in this last location, the use of an Inconel spacer having minimal critical power effect on the passing fluid flow with corresponding reduced pressure drop can be used.

### BRIEF DESCRIPTION OF THE DRAWINGS

Fig. 1 is a perspective broken away view of a fuel bundle according to this invention illustrating the fuel bundle having a matrix of part length rods and showing in the upper two phase region of the fuel bundle the decreased spacer pitch;
Fig. 2A and 2B are respective plan sections of the fuel bundle of Fig. 1 illustrating partial length rods in the preferred 9 by 9 matrix, it being realized that the particular matrix utilized can be considerably varied;
Fig. 2C and 2D are respective plan sections of the similar to but not identical with the fuel bundle of Fig. 1 illustrating partial length rods in the preferred 10 by 10 matrix, it being realized that the particular matrix utilized can be considerably varied;
Figs. 3A-3F are schematic graphics illustrating the spacers alone as planar elements illustrating the relative placement of the eight spacers of this invention along the axial length of the fuel bundle relative to the upper and lower tie plates.
Figs. 4A-4C are respective side elevation before twisting, side elevation after twisting, and plan view after installation of swirl vanes incorporated to a Zircaloy spacer of the ferrule type;
Figs. 5A-5C are respective side elevation before twisting, side elevation after twisting, and plan view after installation of swirl vane tips incorporated to a Zircaloy spacer of the ferrule type;
Figs. 6A-6C are respective side elevation before twisting, side elevation after twisting, and plan view after installation of swirl vane tips incorporated to a Zircaloy spacer of the ferrule type, the tips here having fastening tabs extending parallel to the sides of the ferrules of the spacer;
Figs. 7A and 7B are side elevations of swirl vanes before and after being twisted to impart the helical configuration of this invention;
Figs. 7C and 7D are respective side elevation and plan views of the swirl vanes incorporated to ferrule spacers; and,
Fig. 8 is a side elevation section of a spacer having increased vertical height.

### DESCRIPTION OF THE PREFERRED EMBODIMENT

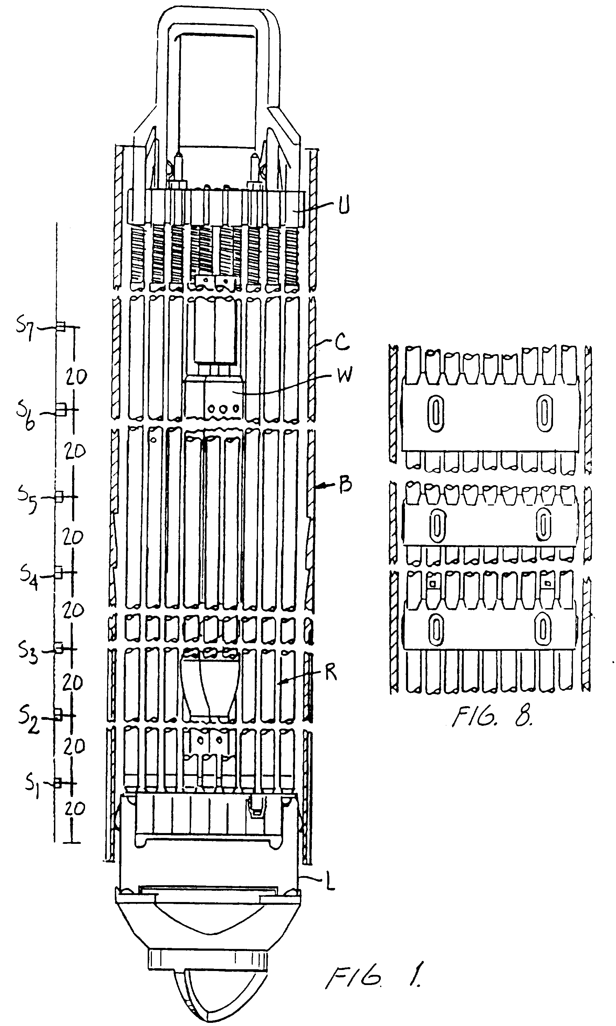

Referring to Fig. 1, 2A and 2B, the prior art construction of a fuel bundle can be understood insofar as it is relevant here.

A fuel bundle B is illustrated, having a channel C with an upper tie plate U and a lower tie plate L. A plurality of fuel rods R are supported on the lower tie plate L, and extend upwardly to and toward the upper tie plate U. In the embodiment here shown, a large central water rod W is utilized.

Operation of the fuel bundle as part of a core in a large boiling water reactor (not shown) can be understood. Water enters through lower tie plate L. The water passes through upwardly and about the rods R. During this passage, steam is generated. Finally, a steam and water mixture passes outwardly up and through the upper tie plate U. During the steam generation, channel C isolates the core bypass volume from the flow interior of the fuel bundle.

As shown in Fig. 1, and 3A, seven spacers S₁ - S₇ are normally utilized. These spacers are shown respectively in Figs. 2A and 2B.

With respect to Fig. 2B, spacers S₅ through S₁ occupying positions in the lower portion of the fuel bundle B are illustrated for a 9 by 9 fuel rod matrix. These spacers surround the large water rod W and maintain individual rods at their discrete elevations in the proper alignment.

Referring to Fig. 2A, the upper spacers S₆ and S₇ are illustrated. These respective spacers raise the rod matrix above the termination of the so-called "part length rod."

As of this writing, the preferred embodiment of this invention includes the 9 by 9 array of Figs. 1, 2A and 2B.

With respect to Fig. 2D, spacers S₅ through S₁ occupying positions in the lower portion of a fuel bundle similar to fuel bundle B are illustrated for a 10 by 10 fuel rod matrix. These spacers surround the large water rod W and maintain individual rods at their discrete elevations in the proper alignment.

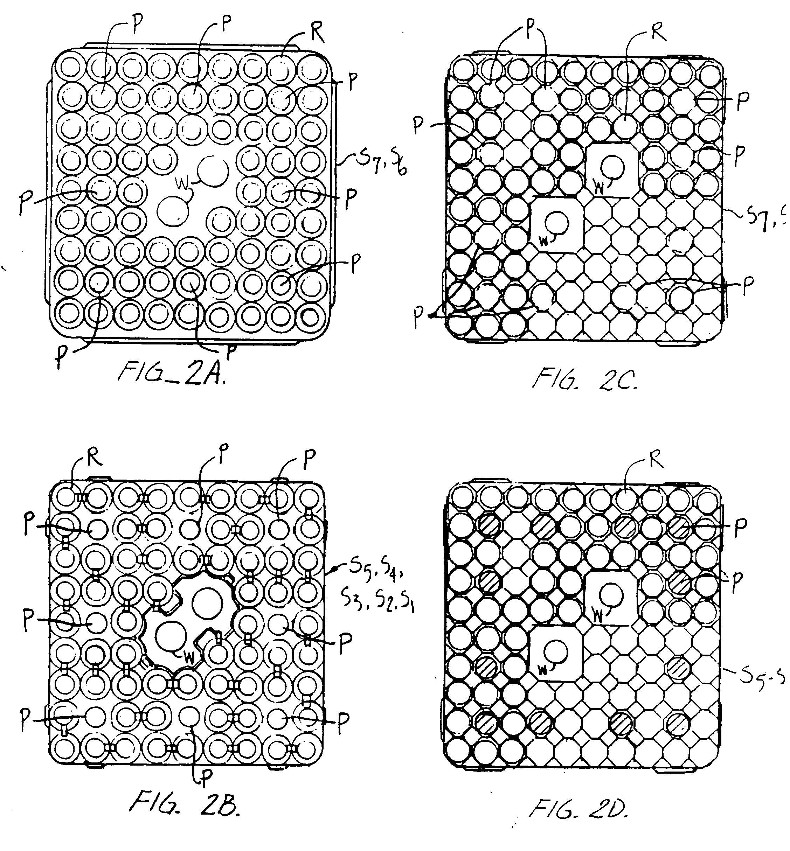

Referring to Fig. 2C, the upper spacers S₆ and S₇ are illustrated. These respective spacers raise the rod matrix above the termination of the so-called "part length rod."

Referring to the aforesaid Dix application, it diclosed to place within the fuel bundle a group of part length rods P.

Simply stated, and above spacer S₅ and before spacers S₆ and S₇, part length rods P were utilized. The part length rods were supported on the lower tie plate L. They extended up to and through spacer 5. They terminated a short distance above spacer 5.

From their point of termination above spacer 5, the part length rods P define voids in the upper two-phase region of the fuel bundle.

Benefits are realized from this construction. These have been set forth above.

As the reader undoubtedly further understands, we have, through extensive testing, discovered that critical power is less than anticipated in the upper two-phase region of the illustrated fuel bundle compared with all full length rods in the bundle. That is to say, above the part length rods and through the end of the active fuel of the full length fuel rods R, critical power conditions may be met prematurely at the fuel rods. This being the case, the entire bundle must be limited so that at no individual point on any individual fuel rod R, the critical power limitations are exceeded.

Referring to Figs. 3A through 3F, the invention herein is schematically illustrated.

Fig. 3A, only, represents prior art. Specifically, only two elements are illustrated.

First, there is a bar graph 40. Bar graph 40 shows seven spacers S₁ - S₇, all on 50.8 cm (20 inch) centers.

Secondly, there is a partial length rod P illustrated. Partial length rod P is shown being approximately 259 cm (102")in length, and terminating just above spacer S₅. This bar graph illustrates the construction set forth in Fig. 1.

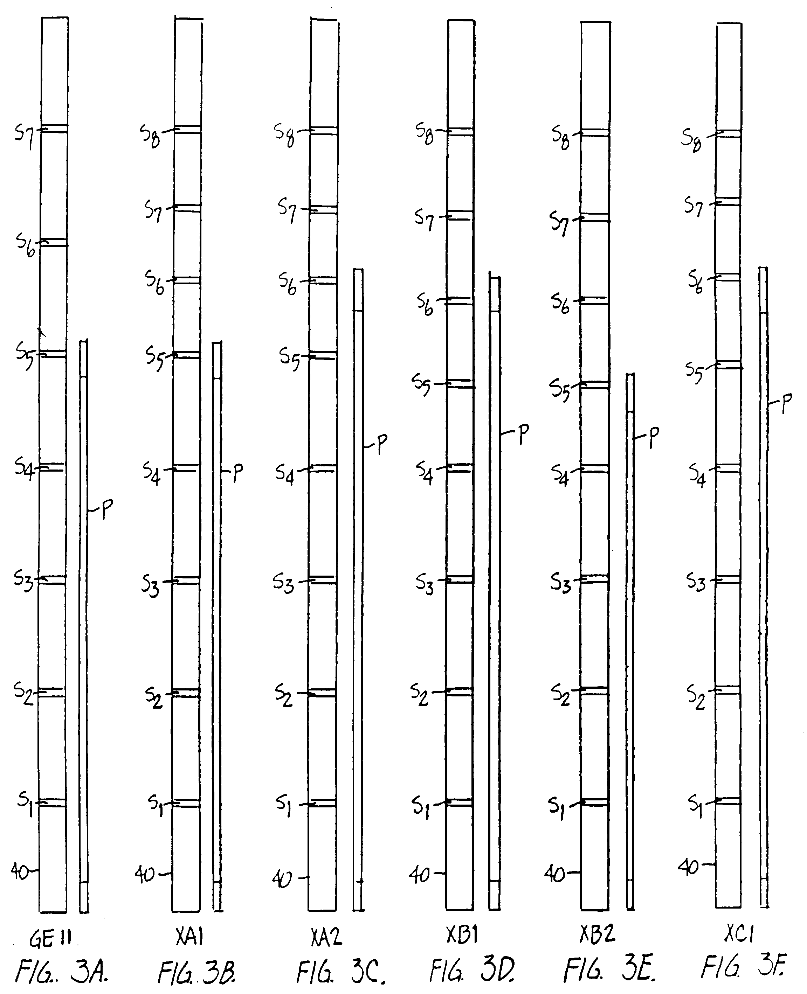

Fig. 3B is our preferred embodiment. Specifically, it constitutes a configuration on which actual tests have been run. Partial length rod P is 259 cm (102") in length. Spacer distribution from spacer S₁ through spacer S₅ is the same as it has been before. Spacers S₆, S₇ and S₈ are on respective 33.8 cm (13.3") centers. As the reader will understand, an additional spacer S₈ has been added.

In all of the embodiments that follow, the reader will understand that the additional spacers are more than that number required to maintain the rods against rod bow and in their design side by side relation. Further, the spacers are ferrule-type spacers, utilizing a relatively thin zircaloy metal (in the thicknesses generally about 0.051 cm (20/1000ths) of an inch). It has been found that improved critical power results.

Once the configuration of Fig. 3B is understood, other possible configurations suggest themselves. They will be briefly addressed below.

With respect to Fig. 3C, bar graph 40 shows a part length rod approximately 292 cm (115") long, extending up to, through and including spacer S₆. The spacer separation is the same as Fig. 3B.

Referring to Fig. 3D, a part length rod 287 cm (113") is utilized. The spacing of the spacers differs only above spacer S₄. From spacer S₄ through spacer S₈, the spacers are on 38.1 cm (15") centers.

Regarding Fig. 3E, it will be understood that the spacing of the spacers remains the same as in Fig. 3D. However, the part length rod is 246 cm (97") long, and thus is braced at spacer S₅.

Regarding Fig. 3F, the design there appears to have potential even exceeding our preferred embodiment which we illustrate in Fig. 3B. As of the writing of this patent application, this configuration has not been specifically tested. We therefore do not claim it as our preferred embodiment, but do call to the attention of the reader the fact that this design may be beneficial.

Simply stated, and above spacer S₄, the pitch of the spacers S₅, S₆, S₇ and S₈ gradually decreases. The partial length rod used with the design is 295 cm (116") in length, and extends through spacer S₆. Specifically, between spacer S₄ and S₅ an 45.7 cm (18")separation is utilized. Between spacer S₅ and S₆, a 40.6 cm (16") separation is utilized. Between spacers S₆ and S₇, a 35.6 cm (14") spacing is utilized. Finally, between spacers S₆ and S₈, a 30.5 cm (12") spacing is utilized.

The reader will realize that in this latter design, decreasing spacer pitch occurs at that portion of the fuel bundle wherein the void fraction increases.

It has been found in addition to the decreased spacer pitch, that spacers incorporating swirl vane constructions in the upper two phase region of the fuel bundle in conjunction with partial length rods have the same overall beneficial effect. Specifically, critical power is increased even though the insertion of the spacers having the swirl vanes tends to restore some -- if not all -- of the improved pressure drop in the upper two phase region of the fuel bundle. Accordingly, the following constructions are exemplary of spacers which when left on a regular pitch through the incorporation of swirl vanes produce an increased critical power phenomenon.

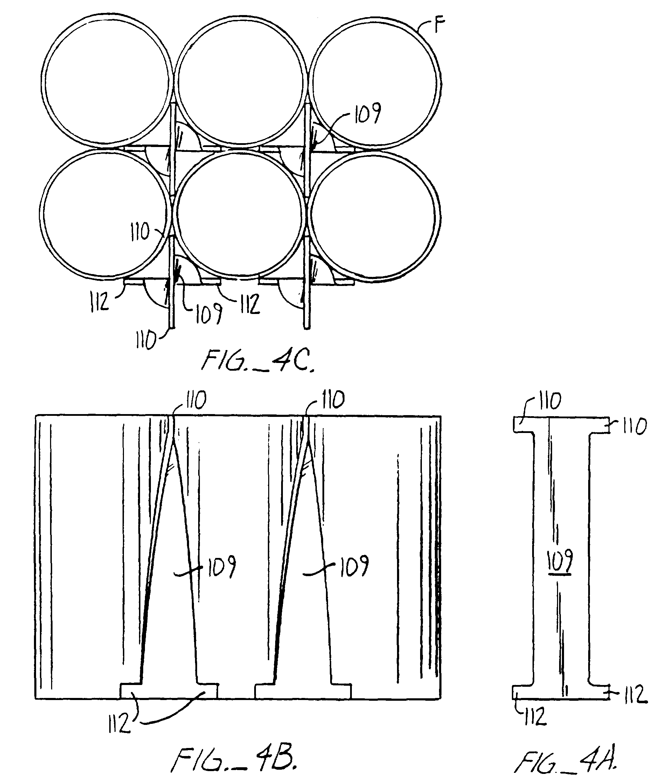

Referring to Fig. 4A, an I shaped tab 109 having tabs 110 at the upper portion and tabs 112 is shown in the planar mode before twisting. Fig. 4B shows this construction in the twisted configuration. Fig. 4C shows the swirl vane incorporated to ferrules at their respective upper and lower ends. In this configuration, the main portion of the tab 109 deflects water towards the rods of the spacer while vapor is allowed to continue upwardly. More importantly, this spacer when incorporated to spacers S7, S6 and S5 of Fig. 3A or spacers S8, S7, S6 or S5 of Figs 3B-3F enables fuel bundles having part length rods to realize improved critical power.

It is important to note a distinction. Fig. 3A insofar as it discloses ordinary spacers in combination with part length rods is prior art. However, when spacer having swirl vanes are added in addition to a fuel bundle having part length rods, the improved critical power limitations of this invention are realized.

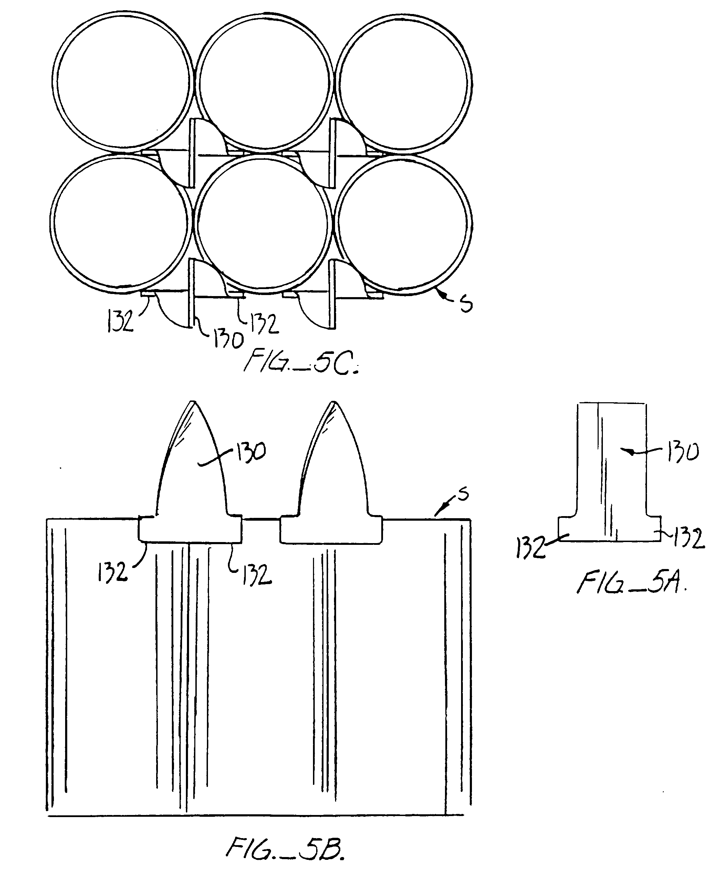

It is not necessary that the swirl vanes extend the entire length of the spacer. Specifically Fig. 5A illustrates a swirl vane end tab 132 before twisting. This swirl vane end tab 132 is show twisted and attached to the ferrule spacer construction illustrated in side elevation and plan respectively in Figs 5B and 5C. Attachment occurs at tabs 132 to the sides of the ferrules F so that turbulence imparting protrusion occurs above the spacer S.

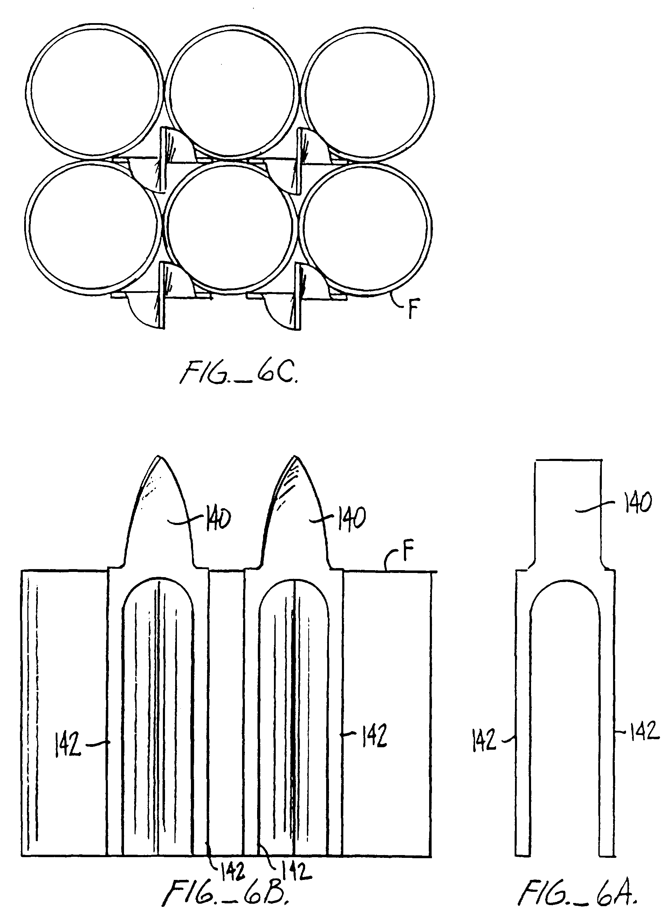

Other constructions can be utilized. Referring to Fig. 6A, a tab 140 having depending arms 142 is shown before twisting. In respective Figs. 6B and 6C, attachment of the tabs occurs to the ferrules F with the full length of the arms 142 effecting secure fastening of the arms to the ferrules F.

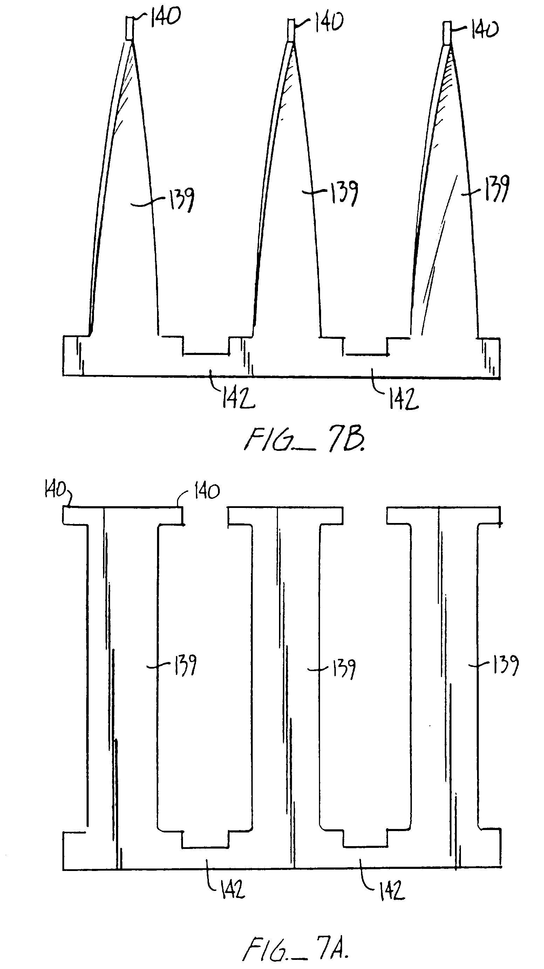

Finally, referring to Fig. 7A, a swirl vane 139 is shown in the untwisted state. Referring to Fig. 7B, the respective swirl vanes 139 have all been twisted. Tabs 140 are then ready for attachment to a ferrule spacer.

Referring to Figs. 7C and 7D attachment to the respective ferrules can be seen. Referring to Fig 7C, an important detail can be noted. It is important that continuous web 142 not interfere with the spacing or pitch at the bottom of the spacer. Such interference could seriously alter the side-by-side spacing of the ferrules F. Accordingly, the tabs 139 have a length so as to dispose the continuous web 142 below the side-by-side ferrules F.

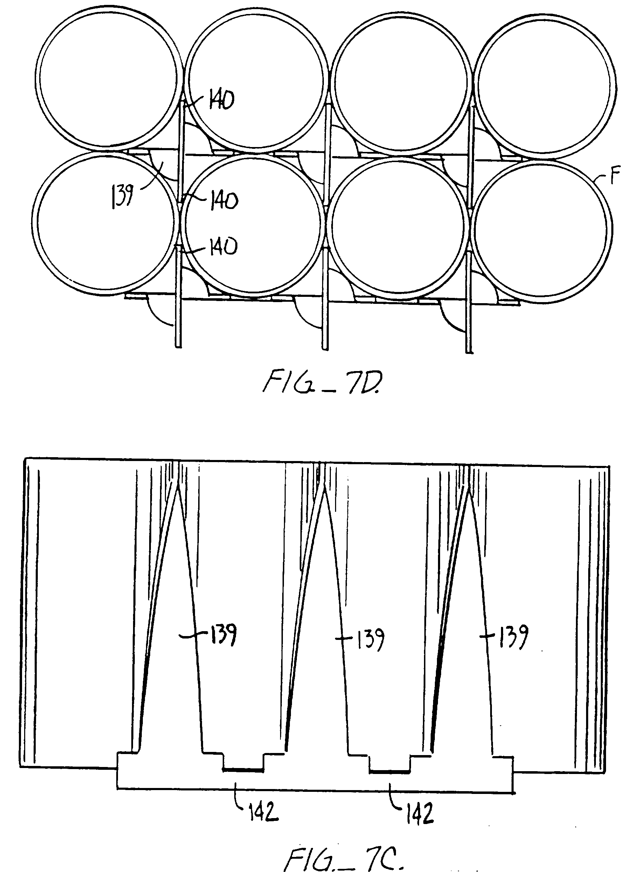

As has been set forth above, other expedients associated with the spacers can be utilized to realize increased pressure drop. For example, in Fig. 8, a spacer of increased vertical height is utilized. Additionally, spacers having metallic constructions from thicker metallic sheets may be utilized. All that is required is to recapture at least some of the pressure drop achieved by the insertion of the part length rods.

Regarding the extent of this recapture of pressure drop, we prefer to recapture less than all of the pressure drop realized. Accordingly, this leaves the upper two phase region of the fuel bundle with less pressure drop than the same bundle would have had with only full length rods.

It is important to note that we use the increased spacer pitch or the swirl vanes attached to the spacer in combination with the two phase flow at the top of the fuel bundle. We rely on the effect of the spacer co-acting with the flow after it has passed through the spacer. This "downstream flow" occurs upwardly from the spacers after the two phase flow has passed over one of the spacers. This effect is important with respect to spacers S7 (Figs. 3B-3F), spacer S6 and spacer S5.

The top most spacer, spacer S7 in Fig. 3A and spacer S8 in Figs. 3B-3F is an exception to this flow principle.

It is not required that the top most spacer S7 in Fig. 3A or spacer S8 in Fig. 3B-3F be either a ferrule type spacer or have swirl vanes attached. In most fuel loadings, the kilowatt output per foot above the top most spacer is not at a level where transition boiling leading to adverse critical power ratios can occur. Consequently, an inconel spacer having low pressure drop with higher neutron absorption can be successfully used at this location. This upper spacer need not incorporate the decreased spacer pitch or the disclosed swirl vanes.

It further will be appreciated that the decreased spacer pitch above the termination point of the partial length rods, is a major characteristic of this invention.

## Claims

1. A boiling water reactor having discrete bundles (B) of fuel rods (R) confined within channel (C) enclosed fuel assemblies; wherein said fuel bundle (B) includes:
a plurality of fuel rods (R) for placement within said channel (C), each said fuel rod (R) containing fissile material for producing nuclear reaction when in the presence of sufficient moderating water coolant and moderated neutrons;
a lower tie plate (L) for supporting said bundle (B) of fuel rods (R) within said channel (C), said lower tie plate (L) joining the bottom of said channel (C) to close the bottom end of said channel (C), said lower tie plate (L) providing defined apertures for the inflow of water coolant in said channel (C) between said fuel rods (R) for generation of steam during said nuclear reaction;
said plurality of fuel rods (R) extending from said lower tie plate (L) wherein a single phase region of said water in said bundle (B) is defined to an upward portion of said bundle (B) wherein a two-phase region of said water and steam in said bundle (R) is defined during nuclear steam generating reaction in said fuel bundle (B) ;
an upper tie plate (U) for supporting the upper end of said bundle (B) of fuel rods (R), said upper tie plate (U) joining the top of said channel (C), said upper tie plate (U) providing apertures for the outflow of water and generated steam in said channel (C) during said nuclear reaction;
spacers (S) intermediate said upper and lower tie plates (U,L) at preselected elevations along said fuel rods (R) for maintaining said fuel rods (R) in spaced apart location along the length of said fuel assembly;
a plurality of said fuel rods (R) being part length fuel rods (P) extending from said lower tie plate (L) towards said upper tie plate (U), said partial length fuel rods (P) terminating within the upper region of said fuel bundle (B) before reaching said upper tie plate (U) and causing decreased pressure drop in said upper two phase region of said fuel bundle (B) during said nuclear steam generating reaction; characterized by :
means (109,132,139) associated with said spacers (S) for restoring at least some of the decreased pressure drop realized by said part length fuel rods (P) whereby improved critical power performance is achieved at said fuel bundle (B) having said part length fuel rods (R).

2. The invention of claim 1 wherein said means associated with said spacers (S) includes decreased spacer pitch in the upper two phase region of said fuel bundle (B).

3. The invention of claim 1 wherein said means associated with said spacers (S) includes vanes (109,132,139) attached to said spacers(S).

4. The invention of claim 3 wherein said spacers (S) have decreasing pitch progressively upward of the upper two phase region of said bundle (B).

5. The invention of claim 1 wherein said means associated with said spacer includes swirl vanes (109,132,139).

6. The invention of claim 1 wherein said means associated with said spacers (S) includes spacers having increased vertical height.

7. The invention of claim 1 wherein :
said spacers (S) have at least one first vertical distribution in a first lower portion of said assembly from said lower tie plate (L) to the ends of said part length fuel rods (P) at a first vertical interval; and
said spacers (S) have at least one second and smaller vertical distribution from in a second portion of said assembly above said first portion to restore at least some of said decreased pressure drop in said upper two phase region of said fuel bundle (B) whereby the spacers (S) present above said part length fuel rods (P) improve the critical power in the upper two-phase region of said bundle (B).

## Patentansprüche

1. Siedewasserreaktor mit diskreten Bündeln (B) von Brennstäben (R), die in von Kanälen (C) umgebenen Brennelementen eingeschlossen sind, wobei das Brennstoffbündel (B) einschließt:
eine Mehrzahl von Brennstäben (R) zur Anordnung innerhalb des Kanales (C), wobei jeder Brennstab (R) spaltbares Material zur Erzeugung einer Kernreaktion enthält, wenn es sich in Gegenwart von genügend moderierendem Wasser-Kühlmittel und moderierten Neutronen befindet;
eine untere Giterplatte (L) zum Abstützen des Bündels (B) von Brennstäben (R) innerhalb des Kanales (C), wobei die untere Gitterplatte (L) mit dem Boden des Kanales (C) zum Verschließen des Bodenendes des Kanales (C) verbunden ist, die untere Gitterplatte (L) definierte Öffnungen zum Einströmen von Wasser-Kühlmittel in den Kanal (C) zwischen die Brennstäbe (R) zur Erzeugung von Dampf während der Kernreaktion aufweist;
die Mehrzahl von Brennstäben (R) sich von der unteren Gitterplatte (L) aus erstreckt, wobei ein Einphasenbereich des Wassers in dem Bündel (B) bis zu einem oberen Abschnitt des Bündels (B) vorhanden ist, worin ein Zweiphasenbereich aus Wasser und Dampf in dem Bündel (B) während der dampferzeugenden Kernreaktion in dem Brennstoffbündel (B) vorhanden ist;
eine obere Gitterplatte (U) zum Abstützen des oberen Endes des Bündels (B) aus Brennstäben (R), wobei die obere Gitterplatte (U) mit dem Oberteil des Kanales (C) verbunden ist, die obere Gitterplatte (U) Öffnungen zum Ausströmen des Wassers und des während der Kernreaktion in dem Kanal (C) erzeugten Dampfes aufweist;
Abstandshalter (S) zwischen der oberen und der unteren Gitterplatte (U,L) in vorausgewählten Höhen entlang der Brennstäbe (R), um die Brennstäbe (R) entlang der Länge des Brennelementes im Abstand voneinander zu halten;
wobei eine Mehrzahl der Brennstäbe (R) Teillängen-Brennstäbe (P) sind, die sich von der unteren Gitterplatte (L) in Richtung der oberen Gitterplatte (U) erstrecken, die Teillängen-Brennstäbe (P) innerhalb des oberen Bereiches des Brennstoffbündels (B) enden, bevor sie die obere Gitterplatte (U) erreichen und einen verringerten Druckabfall in dem oberen Zweiphasenbereich des Brennstoffbündels (B) während der dampferzeugenden Kernreaktion verursachen; gekennzeichnet durch:
eine Einrichtung (109,132,139), die mit den Abstandshaltern (S) verbunden sind, um mindestens einen Teil des verringerten Druckabfalles, der durch die Teillängen-Brennstäbe (P) realisiert wird, wiederherzustellen, wodurch eine verbesserte, kritische Leistungsfähigkeit bei dem Brennstoffbündel (B) mit den Teillängen-Brennstäben (R) erzielt wird.

2. Erfindung nach Anspruch 1, worin die genannte Einrichtung, die mit den Abstandshaltern (S) verbunden ist, einen verringerten Abstand der Abstandshalter im oberen Zweiphasenbereich des Brennstoffbündels (B) einschließt.

3. Erfindung nach Anspruch 1, worin die mit den Abstandshaltern (S) verbundene Einrichtung an den Abstandshaltern (S) angebrachte Schaufeln (109,132,139) einschließt.

4. Erfindung nach Anspruch 3, worin die Abstandshalter (S) fortschreitend nach oben im oberen Zweiphasenbereich des Bündels (B) einen abnehmenden Abstand aufweisen.

5. Erfindung nach Anspruch 1, worin die mit den Abstandshaltern verbundene Einrichtung Drallschaufeln (109,132,139) einschließt.

6. Erfindung nach Anspruch 1, worin die mit den Abstandshaltern (S) verbundene Einrichtung Abstandshalter mit größerer, vertikaler Höhe einschließt.

7. Erfindung nach Anspruch 1, worin die Abstandshalter (S) mindestens eine erste vertikale Verteilung in einem ersten unteren Abschnitt des Brennelementes von der unteren Gitterplatte (L) bis zu den Enden der Teillängen-Brennstoffstäbe (P) in einem ersten vertikalen Intervall aufweisen, und
die Abstandshalter (S) mindestens eine zweite und geringere, vertikale Verteilung ab einem zweiten Abschnitt des Brennelementes oberhalb des ersten Abschnittes aufweisen, um zumindest einen Teil des veringerten Druckabfalles in dem oberen Zweiphasenbereich des Brennstoffbündels (B) wiederherzustellen, wodurch die oberhalb der Teillängen-Brennstäbe (P) vorhandenen Abstandshalter (S) die kritische Leistung im oberen Zweiphasenbereich des Bündels (B) verbessern.

## Revendications

1. Réacteur à eau bouillante comportant des faisceaux séparés (B) de crayons combustibles (R) confinés dans des assemblages combustibles enfermés dans un boîtier-canal (C), réacteur dans lequel ledit faisceau combustible (B) comprend:
une pluralité de crayons combustibles (R) destinés à être placés à l'intérieur dudit boîtier-canal (C), chacun desdits crayons combustibles (R) contenant une matière fissile destinée à produire une réaction nucléaire quand elle est en présence d'une quantité suffisante d'eau réfrigérante de modération et de neutrons modérés;
une plaque de liaison inférieure (L) destinée à supporter ledit faisceau (B) de crayons combustibles (R) à l'intérieur dudit boîtier-canal (C), ladite plaque de liaison inférieure (L) unissant la base dudit boîtier-canal (C) de manière à fermer l'extrémité inférieure dudit boîtier-canal (C), ladite plaque de liaison inférieure (L) comportant des ouvertures définies pour l'entrée de l'eau réfrigérante dans ledit boîtier-canal (C) entre lesdits crayons combustibles (R) pour générer de la vapeur pendant ladite réaction nucléaire;
ladite pluralité de crayons combustibles (R) s'étendant depuis la plaque de liaison inférieure (L),une région monophasée de ladite eau dans ledit faisceau (B) étant définie jusqu'à une partie dudit faisceau (B) située vers le haut, une région biphasée desdites eau et vapeur dans ledit faisceau (B) étant définie pendant la réaction générant de la vapeur d'eau par réaction nucléaire dans ledit faisceau combustible (B);
une plaque de liaison supérieure (U) destinée à supporter l'extrémité supérieure dudit faisceau (B) de crayons combustibles (R), ladite plaque de liaison supérieure (U) unissant le sommet dudit boîtier-canal (C), ladite plaque de liaison supérieure (U) comportant des ouvertures pour la sortie de l'eau et de la vapeur générée dans ledit boîtier-canal (C) pendant ladite réaction nucléaire;
des éléments d'espacement (5) entre lesdites plaques de liaison supérieure et inférieure (U, L) à des hauteurs sélectionnées préalablement le long desdits crayons combustibles (R) pour maintenir lesdits crayons combustibles (R) à des endroits espacés le long de l'assemblage combustible;
une pluralité desdits crayons combustibles (R) étant des crayons combustibles (P) de longueur partielle s'étendant depuis ladite plaque de liaison inférieure (L) en direction de ladite plaque de liaison supérieure (U), lesdits crayons combustibles (P) de longueur partielle se terminant à l'intérieur de la région supérieure dudit faisceau combustible (B) avant d'atteindre ladite plaque de liaison supérieure (U) et entraînant une chute de pression plus faible dans ladite région biphasée supérieure dudit faisceau combustible (B) pendant ladite réaction générant de la vapeur; caractérisé par:
des moyens (109, 132, 139) associés auxdits éléments d'espacement (S) pour rétablir au moins une certaine partie de la chute de pression réduite réalisée par lesdits crayons combustibles (P) de longueur partielle, grâce à quoi on obtient une meilleure performance en ce qui concerne la puissance critique au niveau dudit faisceau combustible (B) comportant lesdits crayons combustibles (R) de longueur partielle.

2. Réacteur selon la revendication 1, dans lequel lesdits moyens associés auxdits éléments d'espacement (S) présentent un pas plus faible d'éléments d'espacement dans la région biphasée supérieure dudit faisceau combustible (B).

3. Réacteur selon la revendication 1, dans lequel lesdits moyens associés auxdits éléments d'espacement (S) comprennent des ailettes (109, 132, 139) fixées auxdits éléments d'espacement (S).

4. Réacteur selon la revendication 3, dans lequel lesdits éléments d'espacement (S) présentent un pas qui diminue progressivement vers le haut de la région biphasée supérieure dudit faisceau (B).

5. Réacteur selon la revendication 1, dans lequel lesdits moyens associés auxdits éléments d'espacement comprennent des ailettes de tourbillonnement (109, 132, 139).

6. Réacteur selon la revendication 1, dans lequel lesdits moyens associés auxdits éléments d'espacement (S) comprennent des éléments d'espacement de hauteur plus grande.

7. Réacteur selon la revendication 1, dans lequel
lesdits éléments d'espacement (S) présentent au moins une première distribution verticale dans une première partie inférieure dudit assemblage depuis ladite plaque de liaison inférieure (L) jusqu'aux extrémités desdits crayons combustibles (P) de longueur partielle dans un premier intervalle vertical; et
lesdits éléments d'espacement (S) présentent au moins une seconde distribution verticale plus petite depuis une seconde partie dudit assemblage au-dessus de ladite première partie pour rétablir au moins une certaine partie de ladite chute de pression réduite dans ladite région biphasée supérieure dudit faisceau (R), grâce à quoi les éléments d'espacement (S) présents au-dessus des crayons combustibles (P) de longueur partielle améliorent la puissance critique dans la région biphasée supérieure dudit faisceau (B).
